# EUROPEAN PATENT SPECIFICATION

(11) **EP 1 625 920 B1**
(45) Date of publication and mention of the grant of the patent: **21.11.2007**
(21) Application number: 05017214.7
(22) Date of filing: 08.08.2005
(51) Int. Cl.: B25J 19/00

(54) **Managing structure for umbilical member of industrial robot**
Führungsvorrichtung für eine Versorgungsleitung in einem Industrieroboter
Structure de guidage pour un câble ombilical d'un robot industriel

(30) Priority: 13.08.2004 JP 2004235858
(43) Date of publication of application: 15.02.2006
(73) Proprietor: Fanuc Ltd, Minamitsuru-gun, Yamanashi 401-0597 (JP)
(72) Inventor: Inoue, Toshihiko, Fujiyoshida-shi Yamanashi 403-0017 (JP); Nakayama, Kazutaka, Minamitsuru-gun Yamanashi 403-0023 (JP); Iwayama, Takatoshi FANUC Manshonharimomi, Minamitsuru-gun Yamanashi 401-0511 (JP)
(74) Representative: Schmidt, Steffen J.

(56) References cited:
- EP-A- 1 355 400
- US-A- 5 512 726
- US-A1- 2004 052 630
- PATENT ABSTRACTS OF JAPAN vol. 1997, no. 12, 25 December 1997 (1997-12-25) -& JP 09 216189 A (SHIN MEIWA IND CO LTD), 19 August 1997 (1997-08-19)

## Description

### BACKGROUND ART

### 1. TECHNICAL FIELD

The present invention relates to a managing structure for an umbilical member including a cable and/or a tube connected to a work tool, such as a hand or a welding torch, attached to an industrial robot, according to the preamble of claim 1.

### 2. DESCRIPTION OF THE RELATED ART

Generally, in an industrial robot (hereinafter referred to simply as a robot), a work tool, such as a hand or a welding torch, is attached to an end of a wrist of the robot. Alternatively, a camera or a force sensor may be attached to the end of the wrist of the robot. In this specification, the camera or the sensor attached to the wrist of the robot is also referred as a kind of "a work tool". Many of the work tools must be supplied with electrical energy, an electrical signal, air, assist gases or a welding wire. Further, a cable and/or a tube are used to supply the work tool. There are many kinds of configuration of the cable and/or the tube. For example, a plurality of cables may be collected in one conduit, or, some line elements may be bundled. Also, the conduit or the line elements may be bundled with a servo control cable for controlling a servomotor for driving each axis of the robot. Further, they may constitute a composite cable. In the present specification, the bundled articles is referred to simply as "an umbilical member".

In the prior art, when such an umbilical member is arranged on the robot and connected to the work tool mounted near an end of a wrist of the robot, the umbilical member is contained in a robot arm before a forearm of the robot. Then, the umbilical member is arranged over the forearm, and toward the end of the wrist, while the umbilical member is supported by a hanger attached to the outside of the robot arm.

Fig. 1 is a drawing included in US 2004/0052630 A1, showing one example of the above arrangement of the umbilical member. In Fig. 1, a numeral 1 denotes a robot having a hand 5, mounted near an end of a wrist, and an analog camera, a digital camera or a force sensor C/S attached to the end of the wrist. A cable CB connected to the camera or the sensor C/S extends within a robot mechanism from a wire distribution panel 3 having a connector arranged on a base 2 of the robot 1 and is drawn toward the outside of the robot mechanism before a forearm 4. Then, the drawn cable CB is hung by a hanger 9 mounted near the forearm 4 and connected to the camera or the sensor C/S by extending outside of the forearm 4.

Such a managing structure for the umbilical member is widely used for a robot having another tool such as a hand. However, in such a configuration in which the umbilical member is arranged over the forearm of the robot, when the orientation of the work tool is greatly changed by rotation of a wrist axis of the robot, it is difficult to make the motion of the umbilical member stable. As a result, the frequency of the maintenance of the wire or the tube may be increased by the deterioration of the life, or damage to, the wire or the tube. Further, the unstable motion of the umbilical member may cause interference between the umbilical member and a peripheral equipment.

In order to resolve such a problem, a configuration in which the umbilical member is contained in the forearm of the robot is proposed, as in US 2004/0052630 A1, for example. The above problem may be solved by this configuration to some extent, however, a robot must be individually prepared to correspond to an operation of a system using the robot, whereby the production cost of the robot becomes larger.

Prior art document EP 1,355,400 A1 describes a robot arm having a first wrist element and a second wrist element roatatably supported on the first wrist element.

The umbilical member is drawn from an opening formed in the first wrist element near a holding part arranged on the first wrist element and held by the holding part.

The second wrist element includes a central opening through which an umbilical member is led. The umbilical member then is split into two parts and led out of the second wrist element to be connected to the work tool.

Prior art document JP 09-216189 discloses a torch shaft convertible adapter to which a torch is connected. The umbilical member of the torch is led in parallel to the robot arm supporting the adapter.

### SUMMARY OF THE INVENTION

An object of the present invention is to resolve the above problems. In other words, one object of the invention is to provide a managing structure for an umbilical member, by which the motion of the umbilical member is not so changed even when the orientation of the work tool is greatly changed by rotation of the wrist axis of the robot, whereby the stress applied to a wire or a tube constituting the umbilical member may become smaller. Also, another object of the invention is to provide a managing structure for an umbilical member capable of easily changing the arrangement of the umbilical member at an installation site of the robot, so as to flexibly allow the modification of a system including the robot.

The above problems are solved with the features according to claim 1.

In order to resolve the above problems, in the present invention, the work tool is rotatably supported about an axis parallel to a final axis (j6 axis) of the robot. The umbilical member for the work tool extends within a hollow portion of a speed reduction mechanism for a first wrist element and is introduced toward the outside from an opening formed on a side of a front part of the forearm (or the first wrist element). Then, the umbilical member is supported by a suitable holding means and is connected to the work tool.

The work tool may be a hand including a pair of gripping jaws capable of opening and closing.

A second opening may be formed on the base of the forearm for communicating with the hollow portion of the speed reducer. In this case, a welding torch is used as the work tool and the umbilical member may include a cable for welding current, a tube for supplying shielding gas and a liner for supplying a welding wire. Further, a welding wire feeder may be arranged on the first wrist element and the umbilical member is introduced from the second opening toward the inside of the forearm and the hollow portion of the speed reducer.

The welding wire feeder may also serve as the holding part of the umbilical member. Alternatively, the holding part of the umbilical member may be positioned near the welding wire feeder.

A motor for the welding wire feeder may be contained within the first wrist element.

### BRIEF DESCRIPTION OF THE DRAWINGS

The above and other objects, features and advantages of the present invention will be made more apparent from the following description of the preferred embodiments thereof, with reference to the accompanying drawings, wherein:

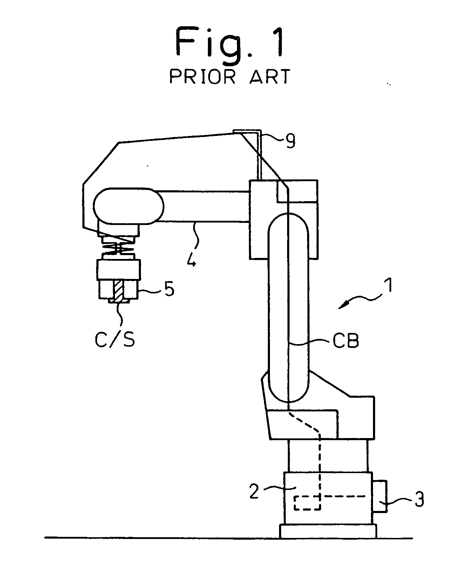

Fig. 1 is an exemplary view of a total configuration of a managing structure for an umbilical member of the prior art;
Fig. 2a is a front view of a total configuration of a managing structure for an umbilical member of a first embodiment of the invention;
Fig. 2b is a side view of the first embodiment of Fig. 2a, showing from a front part of a forearm to a work tool of the managing structure;
Fig. 3a is a detailed front view around the forearm of the first embodiment;
Fig. 3b is a side view of the first embodiment of Fig. 3a, showing from the front part of the forearm to the work tool of the managing structure;
Fig. 4 is a sectional view showing the configuration of the end of the forearm and a part around the end of the forearm of the first embodiment;
Fig. 5 is a sectional view showing the configuration of a forearm and a part around the forearm of a second embodiment of the invention;
Fig. 6 is a sectional view showing the configuration of wiring within the forearm; and
Fig. 7 is an exemplary view of wiring of a cable for controlling a motor capable of being used in the invention.

### DETAILED DESCRIPTION

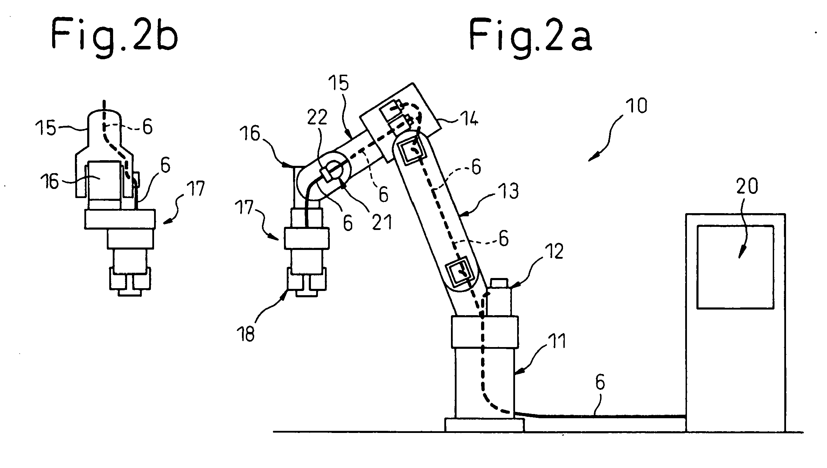

Embodiments of the invention will be described with reference to Figs. 2a - 7. In a first embodiment, the robot used in the embodiment is a handling robot having a hand as a work tool and an arranged umbilical member is a control cable for the hand. In a second embodiment, the robot used in the embodiment is an arc welding robot having a welding torch as a work tool and an arranged umbilical member includes a wire for welding current, a tube for supplying shielding gas and a liner for supplying a welding wire. However, these embodiments are merely examples.

Figs. 2a and 2b show a total configuration of the first embodiment of the invention. In particular, Fig. 2a is a front view and Fig. 2b is a side view showing from a front part of a forearm of the robot to the work tool. In Fig. 2a, a robot 10 is a six-axis robot having a hand 17 attached to the end of a wrist of the robot. The hand 17 may be a conventional hand having gripping jaws 18 and an air cylinder (not shown) for driving the jaws 18. An umbilical member or a control cable 6 used for controlling the motion of the jaws 18 is introduced into a base 11 of the robot 10 from a robot control device 20. Then, the umbilical member 6 extends, within a robot body or an upper arm 13, toward the end of a forearm having a forearm base 14 and a first wrist element 15. The control cable 6 is combined with other wires for servomotors 12 for driving axes of the robot. As shown, the cable 6 is may be divided to each servomotor 12.

A first opening 21 and a holding means 22 for holding the umbilical member are arranged on the side of the first wrist element 15. The umbilical member 6 is drawn toward the outside of the robot body from the first opening 21 and, then, is held by the holding means 22 near the opening 21. Further, the umbilical member 6 extends to the hand 17 along a second wrist element 16 mounted to the first wrist element 15. As the holding means 22, a conventional fixer or a clamp member may be used. Alternatively, an engaging member, such as a ring through which the umbilical member passes, may be used for allowing the umbilical member to move in the longitudinal direction of the umbilical member and to twist or rotate its longitudinal axis. Alternatively, a connector box having a connecting function may be arranged, for convenience, as described below. In the invention, the connector box having the connecting function is also considered to be one of the holding means for the umbilical member 6.

The servomotor for each axis of the robot 10 is controlled, in a known manner, based on an operating command outputted by a robot control device 20. The robot control device 20 also outputs a gripping command to the hand 17, as well as the operating command to the servomotor, for controlling the opening and closing motions of the gripping jaws 18. When the hand 17 grips an object (for example, an assembly), a signal for informing the grip is sent to the control device 20 via the control cable or the umbilical member 6.

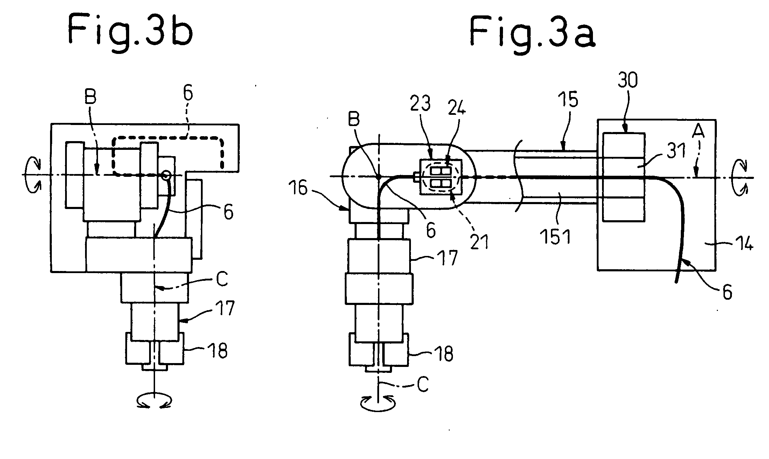

Figs. 3a and 3b show the detail configuration of the forearm and peripherals of the embodiment shown in Figs. 2a and 2b. In particular, Fig. 3a is a front view of the forearm and the peripherals and Fig. 3b is a side view showing from the front part of the forearm to the work tool. In Fig. 3a, a connector box is also explained as an example of the holding means 22 for the umbilical member.

In Figs. 3a and 3b, a speed reducer 30 having a hollow portion 31 is arranged in the forearm base 14. Although the detail is omitted, an input side of the speed reducer 30 is connected to a servomotor for rotating the first wrist element 15 about a first axis A extending along the longitudinal direction of a part of the forearm from the base 14 to the first wrist element 15. On the other hand, an output side of the speed reducer 30 is connected to the first wrist element 15. The umbilical member 6 is, within the forearm base 14, introduced into the hollow portion 31 of the speed reducer 30. After passing through the hollow portion 31, the umbilical member 6 is introduced into an inner space 151 of the first wrist element 15. Then, the umbilical member passes through the inner space 151 generally along the first axis A and reaches the opening 21.

The second wrist element 16 mounted to the first wrist element 15 may be rotated about a second axis B, generally perpendicularly intersecting with the first axis A, by a servomotor of a fifth axis (not shown) of the robot 10. On the other hand, the hand 17 is rotated about a third axis C, generally perpendicular to the second axis B and spaced from the first axis A by a predetermined distance, by a servomotor of a final axis of the robot 10. An example of a mechanism for rotating the hand or the work tool 17 about the third axis C is described below.

A connector box 23 is positioned near the opening 21. The umbilical member 6 from the speed reducer 30 is connected to the connector box 23 and another umbilical member 6 is arranged from the box 23 to the hand 17. A solenoid valve 24 is arranged at a position within the first wrist element 15 and close to the opening 21. The solenoid valve 24 controls supply or removal of air to or from an air cylinder for opening and closing the gripping jaws 18 of the hand 17.

The umbilical member 6 includes a tube for supplying air, as well as the electrical wire such as a control cable for a servomotor (described below) for driving the final axis. The above solenoid valve 24 is arranged on the tube of the umbilical member. A source of supply/removal of air, not shown, is arranged outside of the robot, whereby the supply/removal of air is controlled by the robot control device 20 in a known manner. Further, a tube extending from the source (not shown) is connected to the umbilical member 6 at an appropriate position such in front of the base 11. As this configuration regarding supply/removal of air is known, the detailed description of it is omitted.

When the handling operation of the robot 10 shown in Fig. 2 is carried out, the servomotor for each axis is activated so as to control the position and the orientation of the hand 17. At this point, in order to control the orientation of the hand 17, the fourth, fifth and sixth axes of the robot are operated. Therefore, the influence of motions of the axes on the umbilical member 6 should be considered. First, the fourth axis is activated, the first wrist element 15 is rotated about the first axis A. However, as the umbilical member 6 extends from the hollow portion 31 of the speed reducer 30 to the opening 21 through the first wrist element 15, the rotation of the first wrist element 15 about the first axis A does not significantly influence the umbilical member 6.

When the fifth axis is activated, the second wrist element 16 is rotated about the second axis B. Due to this motion, the hand 17 is pivoted about the second axis, however, the umbilical member 6 is held near the opening 21. Therefore, only a short part of the umbilical member 6, extending from the held position near the opening 21 to the hand 17, follows the motion of the second wrist element 16. The rotation of the second wrist element 16 also does not significantly influence the umbilical member 6.

When the sixth axis is activated, the hand 17 is rotated about the third axis C. In this case, as the third axis C is offset from the first axis A, only a twisting force is applied to the umbilical member 6 connected to the hand 17. Therefore, the umbilical member 6 does not flutter due to the motion of the sixth axis.

Conversely, as the umbilical member 6 does not flutter by the motion of the sixth axis, only the rotational motion of the second element 16 about the second axis B, having the relative narrow operating range, should be considered. Therefore, the umbilical member 6 may be arranged such that the umbilical member 6 is drawn from the side of the first wrist element 15. Thus, according to the embodiment, in relation to the rotation of the final axis and the pivoting of the second wrist element about the second axis B, the motion of the umbilical member may be stable. Further, as the umbilical member 6 extends through the hollow portion of the first wrist element 15 and a driving mechanism thereof toward the opening 21 formed on the side of the first wrist element 15, the wire and the tube constituting the umbilical member may twist over a relative long distance within the forearm when the first wrist element 15 rotates about the first axis A. Therefore, the motion of the umbilical member may also be stable.

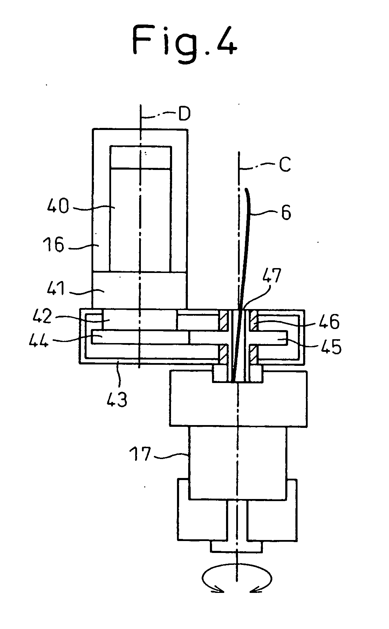

Next, with reference to Fig. 4 showing the configuration of the end of the forearm and peripherals, the rotational mechanism of the hand 17 is explained. As shown in Fig. 4, a servomotor 40 for driving the final (sixth) axis is arranged on the second wrist element 16. The rotation of the servomotor 40 is transmitted to an output flange 42 via a speed reducer 41 containing a support bearing. Further, the rotation of the output flange 42 is transmitted to the hand 17 via an input gear 44 and an output gear 45, so as to rotate the hand 17. The positions and the orientations the servomotor 40, the output flange 42 and the input gear 44 are determined such that a rotation axis D of them intersects with the first axis A (See Fig. 3). Therefore, as the rotation axis C of the output gear 45 and the hand 17 is spaced from the rotation axis D, there is a distance between the rotation axis C and the first axis A. The distance is referred as "a predetermined distance".

The output gear 45 is positioned in a gear box 43. The input gear 44 is rotatably supported by the output flange 42. Also, the output gear 45 is rotatably supported by the gear box 43 via the bearing 4. The hand 17 is fixed to one end of the output gear 45 away from the servomotor 40. The umbilical member or an air tube 6 is rotatably connected to the other end of the output gear 45. The air tube is also connected to the gear box 43. A wire and a pipe constituting the air tube extend through a hollow portion 47 of the output gear 45 and is connected to the hand 17.

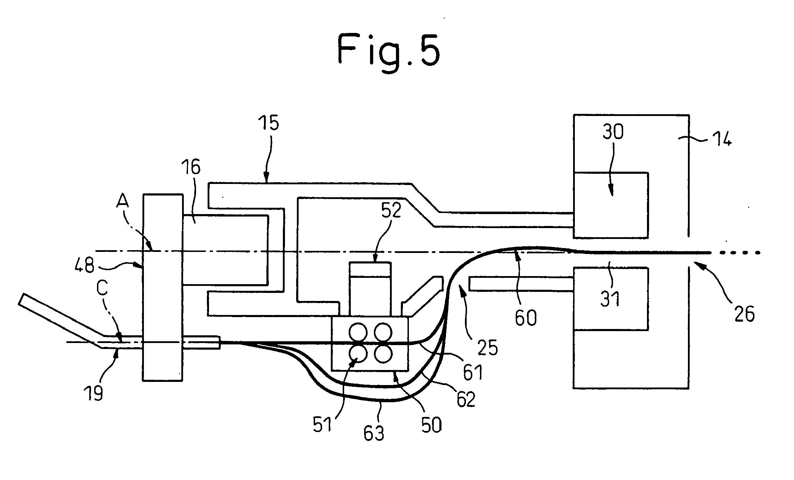

Next, Fig. 5 shows a main part of a second embodiment, i.e., the configuration of the forearm and peripherals thereof. The second embodiment is basically difference from the first embodiment in that the work tool of the second embodiment is a welding torch, but the hand. As shown, in this embodiment, a second opening 26 is formed at the back of the forearm base 14, which is away from the first wrist element 15. An umbilical member 60 is introduced from the second opening 26. The umbilical member 60 introduced into the forearm base 14 extends through the hollow portion 31 of the speed reducer 30 and is drawn toward the outside from the first opening 25 formed on the side of the first wrist element 15.

The umbilical member 60 is constituted, corresponding to an arc welding robot, by using a welding wire 61 enclosed by a liner for supplying the wire, a cable 62 for welding current and a tube 63 for supplying shielding gas. The cable 62 and the tube 63 are directly connected to a welding torch 19 rotatable about the third axis C. As a mechanism for driving the welding torch 19 about the third axis C may be the same as that described using Fig. 4, an explanation of the mechanism is omitted.

The welding wire 61 is exposed from the liner just before diverging from the cable 62 and the tube 63 and, then, guided and fed by a feed roller 51 of a wire feeder 50. After that, the wire 61 is enclosed by the liner again and connected to the welding torch 19 with the cable 62 and the tube 63. The feed roller 51 is driven by a motor 52 contained within the first wrist element 15.

Although only the umbilical member connected to the welding torch 19 is shown in Fig. 5, for convenience, other wires and tubes may be the same as those described using Fig. 2. For example, a control cable is arranged, from the robot control device 20, via a connector of a wire distribution panel 3 mounted on the base 2 of the robot, into the robot mechanism. The control cable then extends through a hollow portion of a turning body of the robot. Some parts of the control cable are diverged from the cable and connected to motors for driving the first and the second axes. The remaining parts of the control cable are arranged along the upper arm 13 (See Fig. 2) and extend toward the forearm base 14 through the robot arm. Further, still other parts of the control cable may be connected to motors for driving the third and the fourth axes. In this case, the remaining parts are introduced, apart from the umbilical member 60, into the first wrist element 15 from the inside of the forearm base 14.

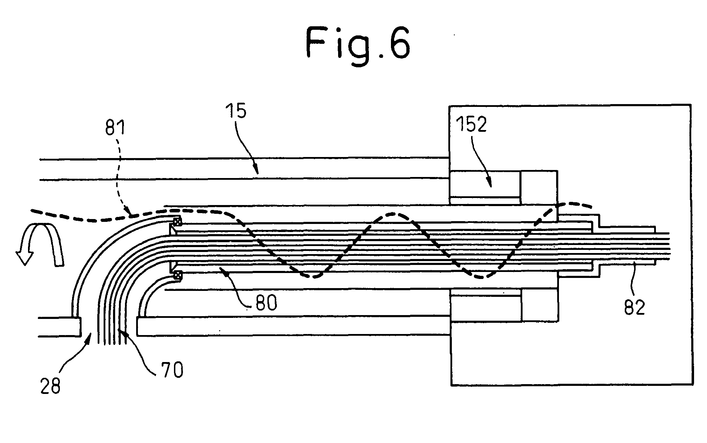

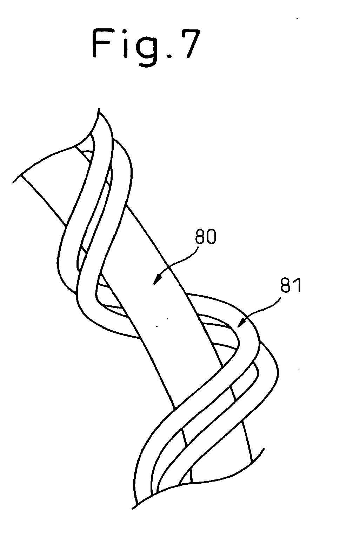

Fig. 6 is a sectional view of the configuration of wiring within the forearm. As shown, an umbilical element (i.e., a tube and/or a wire) 70 extending through the forearm is inserted into a protecting tube 80. An electric signal line is also inserted into the protecting tube 80, with being exposed from a shield and a sheath thereof. A motor control cable 81 is spirally arranged on the outside of the protecting tube 80, also as shown in Fig. 7. Due to this configuration, the twisting motion of the umbilical member 70, caused by the rotation of the forearm over ±180 degrees, may be easily absorbed, even when the umbilical member is bent or twisted near the rotation axis of the forearm. Therefore, a life of the umbilical member may be lengthened. As the shield is removed from the umbilical member, an external noise may affect the signal line and/or a noise may leak from the signal line. However, when the forearm is made from a conductive material and a ground wire, instead of the shield, is connected to the forearm and the robot base, the above noise may be avoided. In addition, the wire and the tube 70 for the work tool of the forearm are separated from the motor control cable 81. In this connection, the rear part of the forearm and an opening 28 are configured such that a necessary cable may be inserted into the rear part and the opening 28 afterward. Further, the above openings 21 and 25 may serve as the opening 28.

Therefore, a user of the robot may add a necessary wire and a tube for the work tool corresponding to the system on the actual field. Also in this case, such a robot may be provided with a partition or the like, in which the motor control cable 81 may be separated, from a processing unit of the wire and tube 70 for the work tool, without affecting a life of the motor control cable 81.

The user may use the configuration shown in Fig. 6, for adding a cable for the work tool on the actual field. In other words, the additional cable may be inserted into the protecting tube 80 having a generally circular cross section such that the additional cable is separated from the motor control wire 81 and the wire 70 for the work tool. Therefore, the contact between the cables may be avoided and the reliability of the motor control cable 81 may be kept. In addition, it is preferable that the protecting tube 80 is made from a low friction material such as Teflon (TM), in order to reduce the friction between the protecting tube and the umbilical member.

The wire and tube 70 must have a margin because the wire and tube 70 may be bent when the second wrist element rotates. However, a handling robot, for example, is usually operated such that the robot faces a lower direction, in relation to a horizontal plane, whereby the rotational range of the wrist of the robot may be limited to about 130 degrees. Therefore, the wire and tube around the wrist may be relatively easily arranged along the forearm.

According to the invention, the load applied to the wire and tube, constituting the umbilical member connected to the work tool mounted on the end of the wrist of the robot, may be reduced. Further, the motion of the umbilical member during the operation of the robot may be stable. As a result, a life of the umbilical member may be extended and interference between the umbilical member and peripherals may be avoided. The field work for changing or adding the umbilical member, required when the system is modified, may be easily carried out, by forming the openings (or the first and second openings) on the front part of the forearm (or the first wrist element) and the rear part of the forearm (or the forearm base), through which the umbilical member may extend within the hollow portions of the forearm and the speed reducer. Therefore, it is useful that only the minimum kinds of robot bases are necessary for various modifications of the system.

While the invention has been described with reference to specific embodiments chosen for the purpose of illustration, it should be apparent that numerous modifications could be made thereto, by one skilled in the art, without departing from the scope of the invention as set forth in the appended claims.

## Claims

1. A managing structure for an umbilical member (6; 60) of an industrial robot (10), the robot having:
a forearm having a base (14);
a first wrist element (15) mounted to the base (14) of the forearm and rotatable about a first axis (A) extending in the longitudinal direction of the forearm;
a second wrist element (16) mounted to the first wrist element (15) and rotatable about a second axis (B) generally perpendicularly intersecting with the first axis (A); and
a work tool (17; 19) mounted to the second wrist element (16) and rotatable about a third axis (C) generally perpendicular to the second axis (B) and spaced from the first axis (A) by a predetermined distance, the umbilical member (6; 60) including a wire and/or a tube connected to the work tool (17; 19),
the managing structure comprising:
a speed reducer (30) having a hollow portion (31) for rotating the first wrist element (15) about the first axis (A), the speed reducer (30) being arranged between the base (14) of the forearm and the first wrist element (15) such that an axis of rotation of the speed reducer (30) coincides with the first axis (A); and
a holding part (22), for holding the umbilical member, arranged on a side of the first wrist element (15),
wherein the umbilical member (6; 60) extends through the hollow portion (31) of the speed reducer (30) and is drawn from a first opening (21) formed in the first wrist element (15) near the holding part (22), wherein at least one of components constituting the umbilical member is held by the holding part (22),
and wherein the umbilical member (6; 60) extends through a hollow portion (47) of a hollow member (43), through which the third axis (C) extends, and is connected to the work tool (17; 19).

2. The managing structure as set forth in claim 1, wherein the work tool is a hand (17) comprising a pair of gripping jaws (18) capable of opening and closing.

3. The managing structure as set forth in claim 1, wherein a second opening (26) is formed on the base (14) of the forearm for communicating with the hollow portion (31) of the speed reducer (30).

4. The managing structure as set forth in claim 3, wherein the work tool is a welding torch (19), the umbilical member includes a cable (62) for welding current, a tube (63) for supplying shielding gas and a liner (61) for supplying a welding wire, a welding wire feeder (50) is arranged on the first wrist element (15), and the umbilical member (60) is introduced from the second opening (26) toward the inside of the forearm and the hollow portion (31) of the speed reducer (30).

5. The managing structure as set forth in claim 4, wherein the welding wire feeder (50) also serves as the holding part (22) of the umbilical member.

6. The managing structure as set forth in claim 4, wherein the holding part (22) of the umbilical member is positioned near the welding wire feeder (50).

7. The managing structure as set forth in one of claims 4 - 6, wherein a motor (52) for the welding wire feeder (50) is contained within the first wrist element (15).

## Patentansprüche

1. Handhabungsstruktur für ein Versorgungselement (6; 60) eines Industrieroboters (10), der aufweist:
einen Vorderarm mit einer Basis (14);
ein erstes Gelenkelement (15), das an der Basis (14) des Vorderarms angebracht und um eine erste Achse (A) drehbar ist, die sich in Längsrichtung des Vorderarms erstreckt;
ein zweites Gelenkelement (16), das am ersten Gelenkelement (15) angebracht und um eine zweite Achse (B) drehbar ist, die die erste Achse (A) im Wesentlichen senkrecht schneidet; und
ein Bearbeitungswerkzeug (17; 19), das am zweiten Gelenkelement (16) angebracht und um eine dritte Achse (C) drehbar ist, die im Wesentlichen senkrecht zur zweiten Achse (B) verläuft und zu der ersten Achse (A) einen vorgegebenen Abstand hat, wobei das Versorgungselement (6; 60) einen Leiter und/oder einen mit dem Bearbeitungswerkzeug (17; 19) verbundenen Schlauch enthält,
wobei die Handhabungsstruktur aufweist:
ein Untersetzungsgetriebe (30) mit einem hohlen Abschnitt (31) zum Drehen des ersten Gelenkelements (15) um die erste Achse (A), wobei das Untersetzungsgetriebe (30) zwischen der Basis (14) des Vorderarms und dem ersten Gelenkelement (15) so angeordnet ist, dass die Rotationsachse des Untersetzungsgetriebes (30) mit der ersten Achse (A) zusammenfällt; und
ein Halteteil (22) zum Halten des Versorgungselements, das an einer Seite des ersten Gelenkelements (15) angeordnet ist,
wobei das Versorgungselement (6; 60) durch den hohlen Abschnitt (31) des Untersetzungsgetriebes (30) verläuft und aus einer ersten Öffnung (21) herausgeführt ist, die im ersten Gelenkelement (15) in der Nähe des Halteteils (22) ausgebildet ist, wobei mindestens eine Komponente der das Versorgungselement bildenden Komponenten vom Halteteil (22) gehalten ist,
und wobei das Versorgungselement (6; 60) durch einen hohlen Abschnitt (47) eines Hohlelements (43) verläuft, durch das sich die dritte Achse (C) erstreckt, und mit dem Bearbeitungswerkzeug (17; 19) verbunden ist.

2. Handhabungsstruktur nach Anspruch 1, bei der das Bearbeitungswerkzeug eine Hand (17) ist, die ein Paar Greifklauen (18) aufweist, die sich öffnen und schließen können.

3. Handhabungsstruktur nach Anspruch 1, bei der eine zweite Öffnung (26) an der Basis (14) des Vorderarms zur Verbindung mit dem hohlen Abschnitt (31) des Untersetzungsgetriebes (30) ausgebildet ist.

4. Handhabungsstruktur nach Anspruch 3, bei der das Bearbeitungswerkzeug ein Schweißbrenner (19) ist, das Versorgungselement ein Kabel (62) für den Schweißstrom, einen Schlauch (63) zum Zuführen von Schutzgas und einen Einsatz (61) zum Zuführen eines Schweißdrahtes (61) enthält, wobei ein Schweißdrahtvorschubgerät (50) am ersten Gelenkelement (15) angeordnet ist und das Versorgungselement (60) von der zweiten Öffnung (26) aus zur Innenseite des Vorderarms und zum hohlen Abschnitt (31) des Untersetzungsgetriebes (30) eingeführt ist.

5. Handhabungsstruktur nach Anspruch 4, bei der das Schweißdrahtvorschubgerät (50) auch als das Halteteil (22) des Versorgungselements dient.

6. Handhabungsstruktur nach Anspruch 4, bei der das Halteteil (22) des Versorgungselements in der Nähe des Schweißdrahtvorschubgeräts (50) angeordnet ist.

7. Handhabungsstruktur nach einem der Ansprüche 4 bis 6, bei der ein Motor (52) für das Schweißdrahtvorschubgerät (50) im ersten Gelenkelement (15) enthalten ist.

## Revendications

1. Structure de guidage pour un câble ombilical (6 ; 60) d'un robot industriel (10), le robot possédant :
un avant-bras possédant une base (14) ;
un premier organe de poignet (15) monté sur la base (14) de l'avant-bras et rotatif autour d'un premier axe (A) s'étendant dans la direction longitudinale de l'avant-bras ;
un deuxième organe de poignet (16) monté sur le premier organe de poignet (15) et rotatif autour d'un deuxième axe (B) coupant le premier axe (A) globalement à la perpendiculaire ; et
un outil de travail (17 ; 19) monté sur le deuxième organe de poignet (16) et rotatif autour d'un troisième axe (C) globalement perpendiculaire au deuxième axe (B) et espacé du premier axe (A) par une distance prédéterminée, le câble ombilical (6 ; 60) comportant un fil et/ou un tube connecté à l'outil de travail (17 ; 19),
la structure de guidage comprenant :
un réducteur de vitesse (30) possédant une partie creuse (31) destinée à faire tourner le premier organe de poignet (15) autour du premier axe (A), le réducteur de vitesse (30) étant agencé entre la base (14) de l'avant-bras et le premier organe de poignet (15) de telle sorte qu'un axe de rotation du réducteur de vitesse (30) coïncide avec le premier axe (A) ; et
un élément de support (22), destiné à supporter le câble ombilical, agencé sur un côté du premier organe de poignet (15),
dans laquelle le câble ombilical (6 ; 60) s'étend au travers de la partie creuse (31) du réducteur de vitesse (30) et est tiré depuis une première ouverture (21) formée dans le premier organe de poignet (15) à proximité de l'élément de support (22), dans laquelle au moins l'un des composants constituant le câble ombilical est supporté par l'élément de support (22), et
dans laquelle le câble ombilical (6 ; 60) s'étend au travers d'une partie creuse (47) d'un élément creux (43), au travers duquel le troisième axe (C) s'étend, et est connecté à l'outil de travail (17 ; 19).

2. Structure de guidage selon la revendication 1, dans laquelle l'outil de travail est une main (17) comportant deux mors de serrage (18) en mesure de s'ouvrir et se fermer.

3. Structure de guidage selon la revendication 1, dans laquelle une deuxième ouverture (26) est formée sur la base (14) de l'avant-bras pour communiquer avec la partie creuse (31) du réducteur de vitesse (30).

4. Structure de guidage selon la revendication 3, dans laquelle l'outil de travail est un chalumeau soudeur (19), le câble ombilical comporte un câble (62) destiné au courant de soudage, un tube (63) destiné à conduire un gaz inerte et une gaine (61) destinée à conduire un fil à souder, un dévidoir de fil à souder (50) est agencé sur le premier organe de poignet (15), et le câble ombilical (60) est introduit depuis la deuxième ouverture (26) vers l'intérieur de l'avant-bras et la partie creuse (31) du réducteur de vitesse (30).

5. Structure de guidage selon la revendication 4, dans laquelle le dévidoir de fil à souder (50) sert également d'élément de support (22) du câble ombilical.

6. Structure de guidage selon la revendication 4, dans laquelle l'élément de support (22) du câble ombilical est positionné à proximité du dévidoir de fil à souder (50).

7. Structure de guidage selon l'une quelconque des revendications 4 à 6, dans laquelle un moteur (52) pour le dévidoir de fil à souder (50) est contenu dans le premier organe de poignet (15).
